# EUROPEAN PATENT SPECIFICATION

(11) **EP 4 378 765 B1**
(45) Date of publication and mention of the grant of the patent: **06.05.2026**
(21) Application number: 22211228.6
(22) Date of filing: 02.12.2022
(51) Int. Cl.: B60S 1/24, F16C 11/06

(54) **WIPER ACTUATING LINKAGE SYSTEM**
WISCHERBETÄTIGUNGSGESTÄNGESYSTEM
SYSTÈME DE TRINGLERIE D'ACTIONNEMENT D'ESSUIE-GLACE

(43) Date of publication of application: 05.06.2024
(73) Proprietor: Valeo Systèmes d'Essuyage, 78322 Le Mesnil Saint Denis (FR)
(72) Inventor: SPIECHA, Antoni, 32 050 Skawina (PL); SZYMANEK, Przemyslaw, 32 050 Skawina (PL); CHRUPCZALSKI, Karol, 32050 Skawina (PL)
(74) Representative: Valeo Visibility

(56) References cited:
- CH-A- 284 976
- DE-A1- 102017 209 620
- US-A1- 2020 164 836

## Description

### TECHNICAL FIELD

The present invention relates to a windscreen wiper actuating linkage system. More particularly, the present invention relates to a ball socket assembly for joining a connecting rod of the windscreen wiper actuating linkage system, and to a method of assembly of a connecting rod to the windscreen wiper actuating linkage system.

### STATE OF THE ART

A windscreen wiper system is generally used on motor vehicles to clean a windscreen of the vehicle. The windscreen wiper system comprises a drive unit and a wiper actuating linkage system, which transforms the rotational motion of the drive unit to a reciprocating motion of at least one wiper arm. Wiper blades are attached to the wiper arms for wiping the windscreen of the vehicle. Conventionally, the wiper actuating linkage system comprises one or more link rods or connecting rods, one or more cranks, and one or more pivot assemblies. Each longitudinal end of the connecting rods are articulated to a corresponding crank by means of a ball-and-socket mechanism, for example.

Conventionally, the ball-and-socket joints are assembled when the windscreen wiper system is assembled. This generally means that the socket, attached to or otherwise incorporated in a connecting rod, is pressed onto a corresponding ball, attached to or otherwise incorporated in a crank arm. This generally requires power-assisted (i.e. hydraulic or pneumatic) tools, for instance a press, and as such is generally performed before the windscreen wiper system is mounted to the vehicle.

It is also common that the the windscreen wiper systems known in the art further comprise a frame tube or other such supporting structure, for supporting the pivot assemblies and the wiper motor and maintaining their positions relative to each other.

The document DE102017209620 describes a wiper actuating linkage system as known in the state of the art.

Components of the known windscreen wiper actuating linkage system are arranged in such a way that the overall windscreen wiper actuating linkage system may be delivered to customers as a unitary piece for mounting it onto a vehicle. However, in order to reduce the transportation cost and ease the assembly process, it may be necessary to deliver two pivot assemblies separately, with the consequence that the linkage elements of the windscreen wiper system must be assembled after mounting to the vehicle.

Consequently, in order to perform the mounting of the ball-and-socket joints as described above, the assembly-line worker is obligated to use power tools, for instance a pneumatically-operated pincers, to apply the force required for assembling the joint. This is cumbersome and time-consuming, particularly in an assembly-line environment.

### SUMMARY OF THE INVENTION

It is therefore an object of the present invention to provide a wiper actuating linkage system which resolves, or at least alleviates, at least some of the drawbacks of the prior art described above.

More precisely, an object of the present invention is to provide a wiper actuating linkage system in which a connecting rod is fixed to a drive crank by way of a ball-and-socket joint without requiring the use of tools.

Another object of the present invention is to provide a wiper actuating linkage system, which facilitates easy assembly of the wiper actuating linkage system onto a motor vehicle, while reducing number of components of the wiper actuating linkage system.

Another object of the present invention is to provide a wiper actuating linkage system, in which pivot assemblies of the wiper actuating linkage system can be easily connected with each other without employing any tools such that the pivot assemblies can be delivered as two different components to a customer.

To this end, the present invention is directed towards a wiper actuating linkage system of a windscreen wiper system, comprising at least one connecting rod extending between longitudinal ends thereof, and at least one crank, a longitudinal end of the at least one connecting rod articulated to the at least one crank by means of a ball socket assembly comprising a socket and a ball stud which is configured to be secured to the crank.

According to the invention, the socket comprises a body portion intended to receive a ball portion of the ball stud therein, and the socket further comprises at least one locking slot configured to receive a locking means for retaining the ball portion inside the socket.

Advantageously, with the configuration of the ball socket assembly of the present invention, it is possible to assemble the connecting rod to the crank without employing any clamping devices or tools, *i.e.* by the assembly-line worker using only his/her bare hands.

Further, as the connecting rod is articulated to the crank manually and without requiring the use of any tools, it is possible that pivot assemblies of the linkage system can be easily connected with each other by manually assembly. Consquently, the components of the wiper actuating linkage system can be delivered as loose components to a customer that are assembled on the vehicle on the final assembly line, rather than installed as a single, difficult-to-manipulate subassembly requiring complex, expensive, and cumbersome tools for assembly and mounting.

Preferably, the body portion comprises a substantially-spherical internal cavity with a closed first end and an open second end opposite to the closed first end, the internal cavity receiving the ball portion of the ball stud.

According to the invention, the socket comprises a mobile first segment and a fixed second segment, the first and second segments together constituting the body portion.

Preferably, the first segment of the body portion has a reduced thickness compared to a second segment of the body portion.

The first segment is thus configured to be capable of deflecting back and forth in a radial direction, thereby facilitating easy assembly of the connecting rod and the crank. In other words, the operator may simply push the connecting rod onto the ball portion with his hand, and the ball portion causes the first segment to flex outwards, thereby receiving the ball portion inside the socket without using any tools.

In a possible variant, the locking means comprises an elongated member and an stop member extending from the elongated member at an extremity thereof.

Upon insertion into the socket, the locking means prevents the outward movement of the snap fitting portion, i.e., the first zone, once the ball portion is received inside the housing of the socket, thereby securely retaining the ball stud inside the socket.

Preferably, the at least one locking slot is arranged adjacent to the body portion, and extends along an outer periphery of the snap fitting portion of the body portion.

According to a possible embodiment, the at least one locking slot has a form complementary to a form of the elongated member.

According to the invention, the first segment is configured to deform radially outward from a resting position during the assembly and/or disassembly of the ball portion with the socket.

According to a possible variant, the stop member of the locking means is configured to abut against a stop surface of the socket when the elongated member is completely inserted into the at least one locking slot.

In this way, both the first segment of the body portion and the locking means are substantially immobilized; the abutment of the locking means against the stop surface preventing the disengagement of the locking means and consequently the liberation of the first segment.

According to a possible variant, the at least one locking slot is formed as a through hole or a blind hole.

According to a possible variant, the socket is overmolded onto a longitudinal end of the at least one connecting rod.

According to a possible variant, the closed first end of the socket and the stop member of the locking means are substantially flush when the locking means is inserted into the at least one locking slot.

According to a second aspect, the invention is directed towards a windscreen wiper device comprising the wiper actuating linkage system according to the foregoing.

According to a third aspect, the invention is directed towards a vehicle comprising the windscreen wiper device according to the foregoing.

According to a fourth aspect, the invention is directed to a method of assembling a connecting rod and a crank of a wiper actuating linkage system according to the foregoing description, comprising the steps of inserting the ball portion of the crank into the socket of the connecting rod, such that the mobile first segment of the body portion is displaced radially outwards as the ball portion is received inside the body portion of the socket, and retaining the ball portion within the internal cavity by inserting an elongated portion of a locking means into the at least one locking slot, such that the mobile first segment of the body portion is blocked from being displaced radially outwards.

Further advantages, features and details of the invention will be apparent from the following description of preferred embodiments of the invention and from the drawings.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics:
Figure1 shows a perspective view of a wiper module having a wiper actuating linkage system, in particular comprising a frame tube, according to the prior art;
Figure.2 shows an exploded view of a wiper actuating linkage system, comprising a connecting rod, a ball socket assembly, a crank, and a locking means, according to an embodiment of the present invention;
Figure 3a shows a perspective view of the socket of the ball socket assembly of the wiper actuating linkage system of Figure 2;
Figure 3b shows a perspective bottom view of the socket of Figure 3a;
Figure 4a shows a perspective view of the ball stud of the ball socket assembly of the wiper actuating linkage system of Figure 2;
Figure 4b shows a perspective view of the locking means of the wiper actuating linkage system of Figure 2;
Figure 5a shows a perspective view of the wiper actuating linkage system of Figure 2 in an assembled, locked configuration;
Figure 5b shows a perspective view of the wiper actuating linkage system of Figure 2 in an assembled, unlocked configuration; and
Figure 5c shows a cross-sectional view of a portion of the assembly shown in Fig.5b, according to an embodiment of the present invention.

### DETAILED DESCRIPTION OF THE INVENTION

The description set forth below in connection with the appended drawings is intended to serve as an illustrative description of one or more exemplary embodiment(s) of the disclosed subject matter, and is not necessarily intended to represent the only embodiment(s) of the invention, nor present it/them in a limiting manner.

Moreover, in certain instances, the description includes specific details for the purpose of providing an understanding of the disclosed subject matter. However, it will be apparent to those skilled in the art that embodiments may be practiced without these specific details. In some instances, well known structures and components may be shown in simplified or schematic form, or omitted entirely, in order to avoid obscuring the concepts of the disclosed subject matter.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or " in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

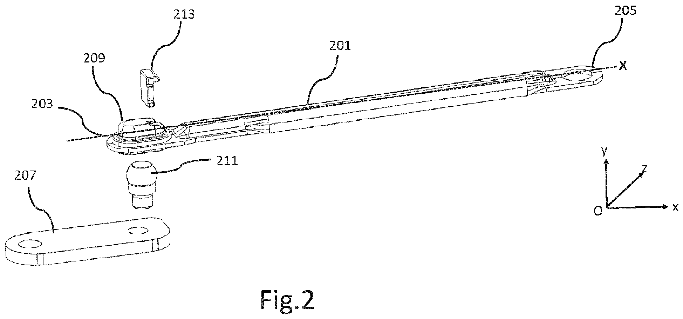

In the following description, the longitudinal, vertical or transverse denominations refer to the orientation of a connecting rod of a wiper actuating linkage system. The longitudinal direction corresponds to a direction of longitudinal extension of the connecting rod, this longitudinal direction being parallel to an axis Ox of an orthonormal reference, for example represented in Fig.2. The transverse direction corresponds to a direction parallel to an Oy axis of this orthonormal frame, the axis Oy being perpendicular to the axis Ox. A vertical direction corresponds to a direction parallel to an axis Oz of the orthonormal coordinate system, the axis Oz being perpendicular to the axis Ox and the axis Oy.

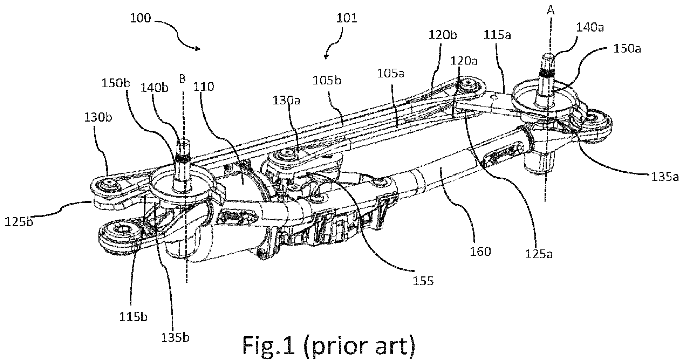

A windscreen wiper system is generally used on motor vehicles to clean a windscreen of the vehicle, for instance to remove rainwater, dust, etc. that may accumulate on the windscreen over the normal course of use of the vehicle. Fig.1 shows a perspective view of an exemplary wiper module having a wiper actuating linkage system according to prior art.

The windscreen wiper system comprises a wiper module 100 shown in detail in Fig.1. The wiper module 100 comprises a drive unit and a wiper actuating linkage system 101, which transfers drive from a wiper motor 110 of the drive unit to a pair of wiper arms (not shown in Figures), providing reciprocating movement of the wiper arms. Wiper blades (not shown in Figures) are attached to the wiper arms for wiping a windscreen of the vehicle. The wiper blades are placed in abutment with the windscreen, such that the wiper blades are capable of wiping the windscreen of a vehicle. The wiper actuating linkage system 101 is provided for moving the wiper arms between a first limit of its trajectory near the bottom of the windscreen (sometimes referred to as the "in-wipe position") and a second limit of its trajectory (sometimes referred to as the "out wipe position"). Optionally, some embodiments may also be capable of moving the wiper arms to a third, storage position upon deactivation of the system, sometimes referred to as the "park position."

The wiper actuating linkage system 101 comprises a first connecting rod 105a transferring a drive from the wiper motor 110 to a first driving crank 115a and via a second connecting rod 105b to a second driving crank 115b. One longitudinal end 120a of the first connecting rod 105a is linked to a second end 125a of the first driving crank 115a. Further, one longitudinal end 120b of the second connecting rod 105b is linked to the second end 125a of the first driving crank 115a. The other longitudinal end 130b of the second connecting rod 105b is linked to a second end 135b of the second driving crank 115b.

A first wiper arm (not shown in Figures) is fixed to a first pivot shaft 140a and the second wiper arm (not shown in Figures) is fixed to a second pivot shaft 140b. The reciprocating motion of the two connecting rods 105a, 105b is transferred via the pivot shafts 140a, 140b into a reciprocating movement of the first wiper arm and the second wiper arm. The first wiper arm rotates about the rotational axis A of the first pivot shaft 140a and the second wiper arm rotates about the rotational axis B of the second pivot shaft 140b.

The wiper actuating linkage system 101 presented in Figure 1 further comprises a first pivot shaft housing 150a and a second pivot shaft housing 150b. The first pivot shaft housing 150a and the second pivot shaft housing 150b support the first pivot shaft 140a and a second pivot shaft 140b, respectively. The first pivot shaft 140a has a first rotational axis A around which the first pivot shaft 140a rotates in the first pivot shaft housing 150a. The second pivot shaft 140b has the second rotational axis B around which the second pivot shaft 140b rotates in the second pivot shaft housing 150b.

The first pivot shaft 140a is fixed to the first end 135a of the first driving crank 115a and the second pivot shaft 140b is fixed to the first end 135b of the second driving crank 115b. The wiper motor 110 is coupled with the windscreen wiper drive linkage 101 via a coupling element 155. The coupling element 155 is linked to the second longitudinal end 130a of the first connecting rod 105a.

The wiper module 100 further comprises a frame tube 160 for supporting the first pivot shaft housing 150a, the second pivot shaft housing 150b and the wiper motor 110. In particular, the wiper motor and the first and second pivot shaft housings 150a, 150b are permanently fixed to the frame tube 160.

The first connecting rod 105a and the second connecting rod 105b driven by the wiper motor 110 to perform a reciprocating linear movement. The reciprocating linear movement of the second connecting rod 105b is transferred into a reciprocating movement of the second driving crank 115b. The movement of the second connecting rod 105b towards the second driving crank 115b causes a rotation of the second driving crank 115b about the rotational axis B of the second pivot shaft 140b. Accordingly, the reciprocating linear movement of the first connecting rod 105a is transferred into a reciprocating movement of the first driving crank 115a. The first driving crank 115a rotates about the rotational axis A of the first pivot shaft 140a.

Thus, in the wiper actuating linkage systems known in the prior art, the various different components thereof are arranged in such a way that the overall windscreen wiper actuating linkage system may be delivered to customers as a single, preassembled, indivisible piece, ready for mounting onto a vehicle.

The assembly of these components is generally done at the time of fabrication of the wiper actuating linkage system, and consequently employ techniques in their assembly that can generally only be accomplished with the use of large, cumbersome, and/or non-portable tools. This is particularly the case for the ball and socket joints used on the connecting rods, whose assembly requires high levels of clamping force applied by e.g. a hydraulic press. Such tools are, in any case, unsuited for use on a vehicle final assembly line.

Therefore, according to an exemplary embodiment of the present invention, a wiper actuating linkage system in provided in which a connecting rod is assembled to a drive crank, without requiring the use of any additional tools.

For the purpose of brevity, an explanation is provided herein by referring to a single connecting rod. However, it is understood to a person skilled in the art, the explanation provided herein is also applicable to wiper actuating linkage systems where multiple connecting rods are employed. Likewise, for the purpose of brevity, an explanation is provided herein by referring to a single drive crank. However, it is understood to a person skilled in the art, the explanation provided herein is also applicable to wiper actuating linkage systems comprising multiple drive cranks, and equally to such cranks as attached to a pivot shaft or to a wiper motor output shaft.

Figure 2 shows an exploded view of a connecting rod, a ball socket assembly, a crank, and a locking means of a wiper actuating linkage system, according to an embodiment of the present invention. In particular, Figure 2 illustrates the connecting rod 201 extending along a longitudinal axis X between a first longitudinal end 203 and a second longitudinal end 205, the crank 207 configured to be assembled with the connecting rod 201, the ball socket assembly comprising a socket 209 and a ball stud 211, and the locking means 213. Each of the above components will be described in greater detail below.

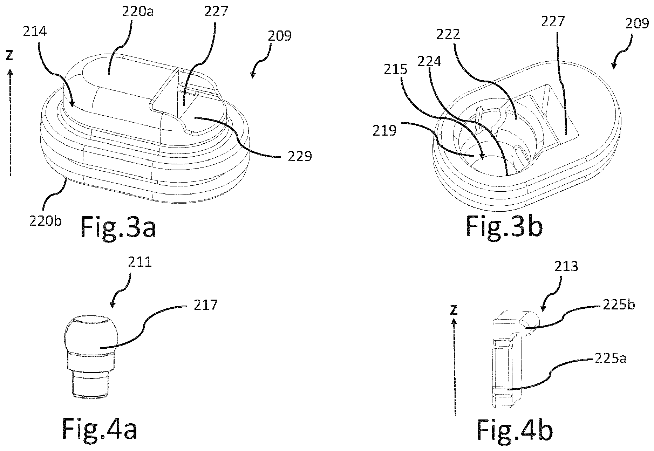

Figure 3a shows a perspective view of a socket of a ball socket assembly of a wiper actuating linkage system, according to an embodiment of the present invention. Figure 3b shows a perspective bottom view of the socket shown in Figure 3a, according to an embodiment of the present invention.

In one possible configuration, the socket 209 is configured to be over molded onto a recess portion provided at the first longitudinal end 203 and/or the second longitudinal end 205 of the connecting rod 201. In another possible configuration, the socket 209 and the connecting rod 201 may be provided as individual components that are subsequently assembled together.

Further, the socket 209 of the present invention may optionally be made from a low friction material (for instance a low-friction polymer such as PTFE or an oil-impregnated polymer such as PET or Nylon), which does not require the application of additional grease to the socket 209 prior to assembly. In addition, as can be seen in Figure 2, the socket 209 is designed to extend along the longitudinal axis X, which is in line with an axis of the connecting rod 201. This particular design of the socket 209 helps to minimize the overall width of the connecting rod 201.

The socket 209 globally comprises a housing 214 (shown in Figure 3a) for receiving a ball of the ball-and-socket joint. In the illustrated embodiment, the housing is constituted by the body portion 215 (shown in Figure 3b). The body portion 215 cooperates with a ball portion 217 of the ball stud 211, by receive the ball portion 217 therein.

To this end, the body portion 215 comprises an internal cavity 219 (shown in the Fig.3b) with a closed first end 220a (shown in Figure 3a) and an open second end 220b (shown in the Fig.3b) opposite the closed first end 220a. As can be seen in Figure 3, the body portion extends along an axis Z perpendicular to the longitudinal axis X. That is to say, the body portion is defined along the vertical axis Z. Further, the internal cavity 219 of the body portion 215 is dimensioned to receive and cooperate with the ball portion 217 of the ball stud 211. By way of a non-limiting example, the internal cavity is of a generally spherical shape in order to cooperate with the spherical shaped ball portion 217 of the ball stud 211.

The socket 209 comprises means for accommodating the insertion and removal of the ball portion 217 of the ball stud 211. To that end, the socket 209 comprises a first zone 222 (shown in Figure 3b) of the body portion 215, extending over an angular sector of the body portion 215. The remaining portion of the body portion 215 is referred as a second zone 224. The first zone 222 and the second zone 224 thus together constitute the body portion 215.

The first zone 222 of the body portion 215 has a reduced thickness, as compared to the second zone 224, and is so configured to be capable of deforming or flexing in a radial direction from its rest position under the application of force, in particular during the assembly and/or disassembly of the ball portion 217 to the socket 209. In particular, it will be seen that the first zone may flex along a longitudinal axis of the socket 209 when the snap fitting portion extends along a transverse axis, i.e., perpendicular to the longitudinal axis of the socket 209.

In the present embodiment, the first zone 222 and second zone 224 are delimited from each other by slits or notches formed in the body portion 215, as visible in Figure 3b. This is advantageous in that it obtains a maximum degree of flexibility in the first zone 222.

In an aspect, the socket 209 further comprises at least one locking slot, for example the locking slot 227 extending along the vertical axis Z. In one example, the at least one locking slot 227 may be arranged adjacent to the body portion 215, and extends along an outer periphery of the first zone 222 of the body portion 215. In one example, the at least one locking slot 227 is formed as a blind hole. In another example, the at least one locking slot 227 is formed as a through hole.

According to an embodiment of the present invention, the socket 209 further comprises a locking means 213 shown in Figure 4b, which is configured to securely hold the ball portion 217 inside the housing 214, as will be described in the following paragraphs.

The locking means 213 includes an elongated member 225a and a stop member 225b extending from the elongated member 225a at one of it ends. As can be seen in Figure 4a, the elongated member 225a extends along the vertical axis Z. The at least one locking slot 227 has a shape complementary to a shape of the elongated member 225a such that the at least one locking slot 227 receives the elongated member 225a of the locking means 213.

The locking means 213 may be retained in the locking slot 227 by friction and/or a simple interference fit. Alternatively, it may be preferable to employ positive retention means (e.g. detents, locking pins, or safety wire) to ensure an undesired disassembly of the joint.

When the locking slot 227 is empty, the first zone 222 of the body portion 215 may freely deflect radially outwards, thus permitting the complete insertion of the ball portion 217 of the ball stud 211 into the socket 209.

However, once the locking means 213 is inserted into the locking slot 227, the locking means 213 blocks the outward movement of the first zone 222. Thus, once the ball portion 217 is received inside the socket 209, inserting the locking means 213 into the locking slot 227 blocks the first zone 222 from deflecting radially outwards. As the first zone 222 can no longer deform radially outwards, the ball portion 217 is effectively blocked within the socket 209. In this manner, the ball and socket joint between the connecting rod 201 and the crank 207 is effectively secured.

Further, an operator may use the stop member 225b to hold the locking means 213 during the assembly and the disassembly of the locking means 213, and additionally to serve as a pressing surface against which an assembly-line worker can apply a force. In such embodiments, the socket 209 may further comprise a stop surface 229, and the stop member 225b of the locking means 213 is configured to abut against the 229 of the socket 209 when the elongated member 225b is completely inserted into the at least one locking slot 227. In particular, the stop surface 229 may be made complementary to the shape of the stop member 225b, so as to reinforce the retention of the locking means 213 and provide a clean visual aspect.

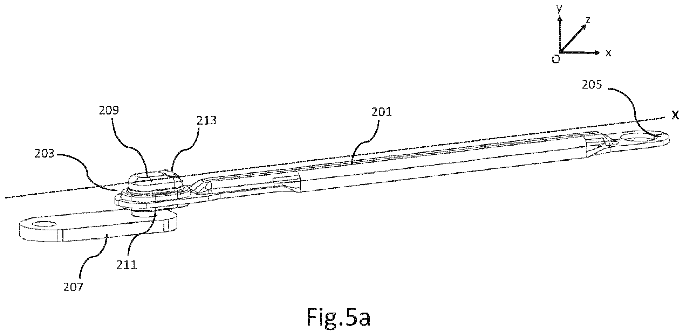

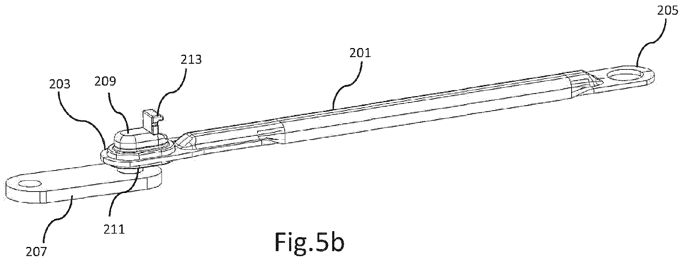

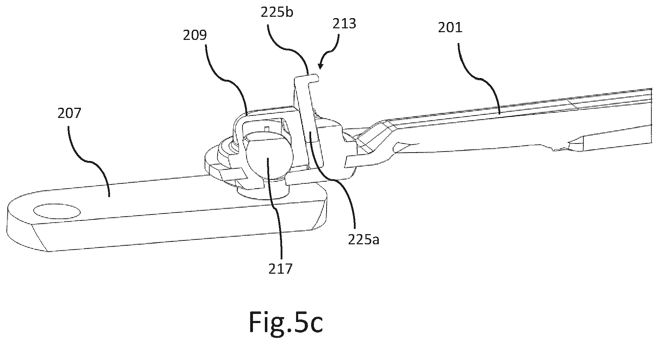

Figure 5a shows a perspective view of a connecting rod assembled to a crank of a wiper actuating linkage system by means of a ball socket assembly and a locking means disposed in a locked position, according to an embodiment of the present invention. Figure 5b shows a perspective view of a connecting rod assembled to a crank of a wiper actuating linkage system by means of a ball socket assembly and a locking means, which is disposed in an unlocked position, according to an embodiment of the present invention. Figure 5c shows a cross-sectional view of a portion of the assembly shown in Figure 5b, according to an embodiment of the present invention.

During the assembly of the connecting rod 201 onto the ball stud 211 of the crank 207, the connecting rod 201 is mounted onto the ball portion 217 provided on the crank 207 by placing the socket 209 provided at the longitudinal end of the connecting rod 201 on the ball portion 217. The first zone 222 of the body portion 215 deflects radially outwards as the ball portion 217 is received inside the internal cavity 219.

Once the ball portion 217 is fully received inside the internal cavity 219, the first zone 222 will, by virtue of its elasticity, revert to its initial position; however, the ball portion 217 is not secured inside the socket 209, despite the generally spherical form of the internal cavity 219, because the first zone 222 is at this point still free to deflect radially outwards and let the ball portion 217 exit the socket 209.

Subsequently, the ball portion 217 is retained securely inside the socket 209 by locking the ball socket connection using the locking means 213. The locking means 213 is inserted into the locking slot 227, such that the elongated member 225a of the locking means 213 is completely received inside the locking slot 227. As can be seen in Figure 5c, the presence of the elongated member 225a of the locking means 213, once fully inserted into the locking slot 227, will block the first zone 222 from being able to deflect radially outwards, thereby preventing the escape of the ball portion 217 of the ball stud 211 from the socket 209.

Preferably, the closed end 220a of the socket 209 and the stop member 225b of the locking means 213 are at substantially same level when the elongated member 225a of the locking means 213 is completely inserted into the at least one locking slot 227, as can be seen in Figure 5a.

Advantageously, with the configuration of the ball socket assembly of the present invention, an operator at the assembly line can easily assemble and disassemble the connecting rod 201 and the crank 207 without employing any clamping devices or tools; the worker need only place the socket 209 of the connecting rod 201 upon the ball portion 217 of the ball stud 211 and drive the locking means 213 home into the locking slot 227 with his/her bare hands.

Further, as the connecting rod 201 can be assembled manually without using any tools, it is possible that pivot assemblies of the linkage system can be easily connected with each other by manually assembling the connecting rod 201 and the crank 207. Thereby, pivot assemblies can be delivered to the customer as separate components, rather than as the single unitary wiper actuating linkage system of the prior art as illustrated in Figure 1.

Consequently, the connecting rod can be manually assembled to the linkage system after the pivot assemblies are mounted individually onto the vehicle. Further, a frame tube or a supporting structure which supports the pivot assemblies and the wiper motor can be eliminated from the linkage system as the connecting rod and the crank can be assembled or disassembled independently of the pivot assemblies.

The person skilled in the art realizes that the present invention by no means is limited to the preferred embodiments described above. On the contrary, many modifications and variations are possible within the scope of the appended claims. In addition, the skilled person readily realizes that the different embodiments described herein may be combined freely to obtain new combinations.

### LIST OF REFERENCE SIGNS

- 201: Connecting rod
- 203: First longitudinal end
- 205: Second longitudinal end
- 207: Crank
- 209: Socket
- 211: Ball stud
- 213: Locking means
- 214: Housing
- 215: Body portion
- 217: Ball portion
- 219: Internal cavity
- 220a: Closed end
- 220b: Open end
- 222: First segment
- 224: Second segment
- 225a: Elongated member
- 225b: Stop member
- 227: Locking slot
- 229: Stop surface

## Claims

1. A wiper actuating linkage system of a windscreen wiper system, comprising
at least one connecting rod (201) extending between longitudinal ends (203, 205) thereof; and
at least one crank (207), wherein a longitudinal end of the at least one connecting rod (201) is articulated to the at least one crank (207) by means of a ball socket assembly comprising a socket (209) and a ball stud (211) which is configured to be secured to the crank (207),the socket (209) comprising a body portion (215) configured to receive a ball portion (217) of the ball stud (211) therein, and at least one locking slot (227) receiving a removable locking means (213) for retaining the ball portion (217) inside the socket (209), **characterized in that** the socket (209) comprises a mobile first segment (222) and a fixed second segment (224), the first and second segments (222, 224) together constituting the body portion (215).

2. The wiper actuating linkage system as claimed in claim 1, wherein the body portion (215) comprises a substantially-spherical internal cavity (219) with a closed first end (220a) and an open second end (220b) opposite to the closed first end (220a), the internal cavity (219) receiving the ball portion (217) of the ball stud (211).

3. The wiper actuating linkage system as claimed in claim 1, wherein the first segment (222) of the body portion (215) has a reduced thickness compared to a second segment (224) of the body portion (215).

4. The wiper actuating linkage system as claimed in any one of the preceding claims, wherein the locking means (213) comprises an elongated member (225a) and an stop member (225b) extending from the elongated member (225a) at an extremity thereof.

5. The wiper actuating linkage system as claimed in any one of the preceding claims, wherein the at least one locking slot (227) is arranged adjacent to the body portion (215), and extends along an outer periphery of the first segment (222) of the body portion (215).

6. The wiper actuating linkage system as claimed in any one of the preceding claims, wherein the at least one locking slot (227) has a form complementary to the form of the elongated member (225a).

7. The wiper actuating linkage system as claimed in any one of claims 1 to 6, wherein the first segment (222) is configured to deform radially outward from a resting position during the assembly and/or disassembly of the ball portion (217) with the socket (209).

8. The wiper actuating linkage system as claimed in any one of claims 5 to 7 in conjunction with claim 4, wherein the stop member (225b) of the locking means (213) is configured to abut against a stop surface (229) of the socket (209) when the elongated member (225a) is completely inserted into the at least one locking slot (227).

9. The wiper actuating linkage system as claimed in any one of preceding claims, wherein the at least one locking slot (227) is formed as a through hole or a blind hole.

10. The wiper actuating linkage system as claimed in any one of preceding claims, wherein the socket (209) is overmolded onto a longitudinal end (203) of the at least one connecting rod (201).

11. The wiper actuating linkage system as claimed in any one of preceding claims, wherein the closed first end (220a) of the socket (209) and the stop member (225b) of the locking means (213) are substantially flush when the locking means (213) is inserted into the at least one locking slot (227).

12. A windscreen wiper system for a vehicle comprising the wiper actuating linkage system as claimed in any one of preceding claims 1-11

13. A vehicle comprising the windscreen wiper system as claimed in claim 12.

14. A method of assembling a connecting rod (201) and a crank (207) of a wiper actuating linkage system according to any one of claims 1-11, the method comprising the steps of:
- inserting the ball portion (217) of the crank (207) into the socket (209) of the connecting rod (201), such that the mobile first segment (222) of the body portion (215) is displaced radially outwards as the ball portion (217) is received inside the body portion (215) of the socket (209); and
- retaining the ball portion (217) within the internal cavity (219) by inserting an elongated portion (225a) of a locking means (213) into the at least one locking slot (227), such that the mobile first segment (222) of the body portion is blocked from being displaced radially outwards.

## Patentansprüche

1. Wischerantriebsgestängesystem eines Windschutzscheibenwischersystems, umfassend mindestens eine Verbindungsstange (201), die sich zwischen Längsenden (203, 205) davon erstreckt; und mindestens eine Kurbel (207), wobei ein Längsende der mindestens einen Verbindungsstange (201) mit der mindestens einen Kurbel (207) mittels einer Kugelgelenkbaugruppe gelenkig verbunden ist, die eine Pfanne (209) und einen Kugelbolzen (211) umfasst, der dazu ausgelegt ist, an der Kurbel (207) befestigt zu werden, wobei die Pfanne (209) einen Körperabschnitt (215), der dazu ausgelegt ist, einen Kugelabschnitt (217) des Kugelbolzens (211) darin aufzunehmen, und mindestens einen Verriegelungsschlitz (227) umfasst, der ein entfernbares Verriegelungsmittel (213) aufnimmt, um den Kugelabschnitt (217) innerhalb der Pfanne (209) zu halten, **dadurch gekennzeichnet, dass** die Pfanne (209) ein bewegliches erstes Segment (222) und ein festes zweites Segment (224) umfasst, wobei das erste und zweite Segment (222, 224) zusammen den Körperabschnitt (215) bilden.

2. Wischerantriebsgestängesystem nach Anspruch 1, wobei der Körperabschnitt (215) einen im Wesentlichen kugelförmigen inneren Hohlraum (219) mit einem geschlossenen ersten Ende (220a) und einem offenen zweiten Ende (220b) gegenüber dem geschlossenen ersten Ende (220a) umfasst, wobei der innere Hohlraum (219) den Kugelabschnitt (217) des Kugelbolzens (211) aufnimmt.

3. Wischerantriebsgestängesystem nach Anspruch 1, wobei das erste Segment (222) des Körperabschnitts (215) eine reduzierte Dicke im Vergleich zu einem zweiten Segment (224) des Körperabschnitts (215) aufweist.

4. Wischerantriebsgestängesystem nach einem der vorhergehenden Ansprüche, wobei das Verriegelungsmittel (213) ein längliches Element (225a) und ein Anschlagelement (225b) umfasst, das sich von dem länglichen Element (225a) an einem Ende davon erstreckt.

5. Wischerantriebsgestängesystem nach einem der vorhergehenden Ansprüche, wobei der mindestens eine Verriegelungsschlitz (227) angrenzend an den Körperabschnitt (215) angeordnet ist und sich entlang eines äußeren Umfangs des ersten Segments (222) des Körperabschnitts (215) erstreckt.

6. Wischerantriebsgestängesystem nach einem der vorhergehenden Ansprüche, wobei der mindestens eine Verriegelungsschlitz (227) eine Form aufweist, die komplementär zur Form des länglichen Elements (225a) ist.

7. Wischerantriebsgestängesystem nach einem der Ansprüche 1 bis 6, wobei das erste Segment (222) dazu ausgelegt ist, sich während der Montage und/oder Demontage des Kugelabschnitts (217) mit der Pfanne (209) radial nach außen von einer Ruheposition zu verformen.

8. Wischerantriebsgestängesystem nach einem der Ansprüche 5 bis 7 in Verbindung mit Anspruch 4, wobei das Anschlagelement (225b) des Verriegelungsmittels (213) dazu ausgelegt ist, gegen eine Anschlagfläche (229) der Pfanne (209) anzuliegen, wenn das längliche Element (225a) vollständig in den mindestens einen Verriegelungsschlitz (227) eingeführt ist.

9. Wischerantriebsgestängesystem nach einem der vorhergehenden Ansprüche, wobei der mindestens eine Verriegelungsschlitz (227) als Durchgangsloch oder Sackloch ausgebildet ist.

10. Wischerantriebsgestängesystem nach einem der vorhergehenden Ansprüche, wobei die Pfanne (209) auf ein Längsende (203) der mindestens einen Verbindungsstange (201) umspritzt ist.

11. Wischerantriebsgestängesystem nach einem der vorhergehenden Ansprüche, wobei das geschlossene erste Ende (220a) der Pfanne (209) und das Anschlagelement (225b) des Verriegelungsmittels (213) im Wesentlichen bündig sind, wenn das Verriegelungsmittel (213) in den mindestens einen Verriegelungsschlitz (227) eingeführt ist.

12. Windschutzscheibenwischersystem für ein Fahrzeug, umfassend das Wischerantriebsgestängesystem nach einem der vorhergehenden Ansprüche 1-11.

13. Fahrzeug, umfassend das Windschutzscheibenwischersystem nach Anspruch 12.

14. Verfahren zum Zusammenbau einer Verbindungsstange (201) und einer Kurbel (207) eines Wischerantriebsgestängesystems nach einem der Ansprüche 1-11, wobei das Verfahren die folgenden Schritte umfasst:
- Einführen des Kugelabschnitts (217) der Kurbel (207) in die Pfanne (209) der Verbindungsstange (201), so dass das bewegliche erste Segment (222) des Körperabschnitts (215) radial nach außen verschoben wird, während der Kugelabschnitt (217) im Körperabschnitt (215) der Pfanne (209) aufgenommen wird; und
- Halten des Kugelabschnitts (217) innerhalb des inneren Hohlraums (219) durch Einführen eines länglichen Abschnitts (225a) eines Verriegelungsmittels (213) in den mindestens einen Verriegelungsschlitz (227), so dass das bewegliche erste Segment (222) des Körperabschnitts blockiert wird, um radial nach außen verschoben zu werden.

## Revendications

1. Système de tringlerie d'actionnement d'essuie-glace d'un système d'essuie-glace de pare-brise, comprenant au moins une bielle (201) s'étendant entre des extrémités longitudinales (203, 205) de celle-ci ; et au moins une manivelle (207), dans lequel une extrémité longitudinale de ladite au moins une bielle (201) est articulée à ladite au moins une manivelle (207) au moyen d'un ensemble douille à rotule comprenant une douille (209) et un goujon à rotule (211) qui est configuré pour être fixé à la manivelle (207), la douille (209) comprenant une partie corps (215) configurée pour recevoir une partie sphérique (217) du goujon à rotule (211) à l'intérieur, et au moins une fente de verrouillage (227) recevant un moyen de verrouillage amovible (213) pour retenir la partie sphérique (217) à l'intérieur de la douille (209), **caractérisé en ce que** la douille (209) comprend un premier segment mobile (222) et un second segment fixe (224), les premier et second segments (222, 224) constituant ensemble la partie corps (215).

2. Système de tringlerie d'actionnement d'essuie-glace selon la revendication 1, dans lequel la partie corps (215) comprend une cavité interne sensiblement sphérique (219) avec une première extrémité fermée (220a) et une seconde extrémité ouverte (220b) opposée à la première extrémité fermée (220a), la cavité interne (219) recevant la partie sphérique (217) du goujon à rotule (211).

3. Système de tringlerie d'actionnement d'essuie-glace selon la revendication 1, dans lequel le premier segment (222) de la partie corps (215) a une épaisseur réduite par rapport à un second segment (224) de la partie corps (215).

4. Système de tringlerie d'actionnement d'essuie-glace selon l'une quelconque des revendications précédentes, dans lequel le moyen de verrouillage (213) comprend un élément allongé (225a) et un élément d'arrêt (225b) s'étendant depuis l'élément allongé (225a) à une extrémité de celui-ci.

5. Système de tringlerie d'actionnement d'essuie-glace selon l'une quelconque des revendications précédentes, dans lequel ladite au moins une fente de verrouillage (227) est disposée adjacente à la partie corps (215), et s'étend le long d'une périphérie extérieure du premier segment (222) de la partie corps (215).

6. Système de tringlerie d'actionnement d'essuie-glace selon l'une quelconque des revendications précédentes, dans lequel ladite au moins une fente de verrouillage (227) a une forme complémentaire à la forme de l'élément allongé (225a).

7. Système de tringlerie d'actionnement d'essuie-glace selon l'une quelconque des revendications 1 à 6, dans lequel le premier segment (222) est configuré pour se déformer radialement vers l'extérieur à partir d'une position de repos pendant l'assemblage et/ou le désassemblage de la partie sphérique (217) avec la douille (209).

8. Système de tringlerie d'actionnement d'essuie-glace selon l'une quelconque des revendications 5 à 7 en combinaison avec la revendication 4, dans lequel l'élément d'arrêt (225b) du moyen de verrouillage (213) est configuré pour venir en butée contre une surface d'arrêt (229) de la douille (209) lorsque l'élément allongé (225a) est complètement inséré dans ladite au moins une fente de verrouillage (227).

9. Système de tringlerie d'actionnement d'essuie-glace selon l'une quelconque des revendications précédentes, dans lequel ladite au moins une fente de verrouillage (227) est formée comme un trou traversant ou un trou borgne.

10. Système de tringlerie d'actionnement d'essuie-glace selon l'une quelconque des revendications précédentes, dans lequel la douille (209) est surmoulée sur une extrémité longitudinale (203) de ladite au moins une bielle (201).

11. Système de tringlerie d'actionnement d'essuie-glace selon l'une quelconque des revendications précédentes, dans lequel la première extrémité fermée (220a) de la douille (209) et l'élément d'arrêt (225b) du moyen de verrouillage (213) sont sensiblement affleurants lorsque le moyen de verrouillage (213) est inséré dans ladite au moins une fente de verrouillage (227).

12. Système d'essuie-glace de pare-brise pour un véhicule comprenant le système de tringlerie d'actionnement d'essuie-glace selon l'une quelconque des revendications précédentes 1-11.

13. Véhicule comprenant le système d'essuie-glace de pare-brise selon la revendication 12.

14. Procédé d'assemblage d'une bielle (201) et d'une manivelle (207) d'un système de tringlerie d'actionnement d'essuie-glace selon l'une quelconque des revendications 1-11, le procédé comprenant les étapes consistant à :
- insérer la partie sphérique (217) de la manivelle (207) dans la douille (209) de la bielle (201), de sorte que le premier segment mobile (222) de la partie corps (215) soit déplacé radialement vers l'extérieur lorsque la partie sphérique (217) est reçue à l'intérieur de la partie corps (215) de la douille (209) ; et
- retenir la partie sphérique (217) à l'intérieur de la cavité interne (219) en insérant une partie allongée (225a) d'un moyen de verrouillage (213) dans ladite au moins une fente de verrouillage (227), de sorte que le premier segment mobile (222) de la partie corps soit bloqué pour l'empêcher d'être déplacé radialement vers l'extérieur.
